(19) Europäisches Patentamt / European Patent Office / Office européen des brevets

(11) **EP 4 310 961 A1**

(12) **EUROPEAN PATENT APPLICATION**
published in accordance with Art. 153(4) EPC

(43) Date of publication:
**24.01.2024 Bulletin 2024/04**

(21) Application number: **22771314.6**

(22) Date of filing: **11.03.2022**

(51) International Patent Classification (IPC):
*H01M 4/75* (2006.01)   *H01M 4/14* (2006.01)
*H01M 4/62* (2006.01)   *H01M 4/68* (2006.01)
*H01M 10/08* (2006.01)

(52) Cooperative Patent Classification (CPC):
**H01M 4/14; H01M 4/62; H01M 4/68; H01M 4/75; H01M 10/08**

(86) International application number:
**PCT/JP2022/010953**

(87) International publication number:
**WO 2022/196566 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2021 JP 2021042678**

(71) Applicant: **GS Yuasa International Ltd.**
**Kisshoin, Minami-ku,**
**Kyoto-shi, Kyoto 601-8520 (JP)**

(72) Inventor: **SAKATA Wataru**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **LEAD ACID STORAGE BATTERY**

(57)   A lead-acid battery disclosed herein includes a negative electrode plate containing a negative electrode material, an electrolyte solution, and a positive electrode plate including a positive current collector and a positive electrode material disposed around the positive current collector. The positive current collector includes a metal structure containing a plurality of dendrite arms. An average interval between the plurality of dendrite arms is 20 pm or less.

Fig. 1A

**Description**

TECHNICAL FIELD

The present invention relates to a lead-acid battery.

BACKGROUND ART

Lead-acid batteries are in use for various applications, including automotive and industrial applications. A lead-acid battery includes a negative electrode plate, a positive electrode plate, and an electrolyte solution. The positive electrode plate includes a positive current collector and a positive active material disposed around the positive current collector. When a charge-discharge cycle is repeated, corrosion of the positive current collector occurs. When the positive current collector is largely corroded, characteristics such as life cycle performance are deteriorated.

Patent Document 1 (JP-A-57-061262) discloses "a lead-acid battery characterized in that, in crystal grains of a metal structure finally determined by casting lead or a lead alloy containing no or a small amount of antimony used as an anode grid material, and subsequent processing and heat treatment, a maximum length in a direction perpendicular to a lead grid body surface is 1/2 or less of a lead grid body dimension, and a minimum length in a direction parallel to a grid surface of microcrystals constituting the crystal grains is 1/3 or more of a maximum length of the crystal grains in the same direction".

Patent Document 2 (JP-A-61-27067) discloses "a lead-acid battery including, as a conductive portion, a lead alloy casting having a dendritic crystal structure in which acid resistant plastic is filled in a gap opened on a surface".

Patent Document 3 (JP-A-52-5425) discloses "a lead-acid battery using a lead alloy grid containing 5% or less of antimony in which a spherical solid solution phase of antimony is uniformly dispersed in a lead solid solution phase".

PRIOR ART DOCUMENTS

PATENT DOCUMENTS

Patent Document 1: JP-A-57-061262
Patent Document 2: JP-A-61-27067
Patent Document 3: JP-A-52-5425

SUMMARY OF THE INVENTION

PROBLEMS TO BE SOLVED BY THE INVENTION

At present, it is required to suppress corrosion of the positive current collector. In such a situation, an object of the present invention is to provide a lead-acid battery in which corrosion of a positive current collector is suppressed.

MEANS FOR SOLVING THE PROBLEMS

An aspect of the present invention relates to a lead-acid battery. The lead-acid battery includes a negative electrode plate containing a negative electrode material, an electrolyte solution, and a positive electrode plate including a positive current collector and a positive electrode material disposed around the positive current collector, the positive current collector includes a metal structure containing a plurality of dendrite arms, and an average interval between the plurality of dendrite arms is 20 pm or less.

ADVANTAGES OF THE INVENTION

According to the present invention, a lead-acid battery in which corrosion of a positive current collector is suppressed is obtained.

BRIEF DESCRIPTION OF THE DRAWINGS

Fig. 1A is a schematic view for explaining an example of a dendrite arm.

Fig. 1B is a schematic view for explaining a method for obtaining a DAS.

Fig. 2A is a metal microscope image showing an example of a metal structure of a positive current collector.

Fig. 2B is a metal microscope image showing another example of the metal structure of the positive current collector.

Fig. 2C is a graph showing an example of a relationship between the DAS of the positive current collector and an amount of corrosion.

Fig. 3 is a perspective view schematically showing a state where a lid of a lead-acid battery of an example according to an embodiment of the present invention is removed.

Fig. 4A is a front view of the lead-acid battery shown in Fig. 3.

Fig. 4B is a schematic cross-sectional view of a cross section taken along line IVB-IVB in Fig. 4A as viewed from an arrow direction.

Fig. 5 is a top view schematically showing a clad-type positive electrode plate of an example according to an embodiment of the present invention.

Fig. 6 is a schematic cross-sectional view of a cross section taken along line VI-VI in Fig. 5 as viewed from the arrow direction.

Fig. 7 is a graph showing an example of results of Experimental Example 1.

Fig. 8 is a graph showing another example of results of Experimental Example 1.

Fig. 9 is a graph showing an example of results of Experimental Example 2.

Fig. 10 is a graph showing an example of results of Experimental Example 3.

Fig. 11 is a graph showing an example of results of Experimental Example 4.

MODE FOR CARRYING OUT THE INVENTION

Hereinafter, embodiments of the present invention will be described with reference to examples, but the present invention is not limited to the examples described below. In the description below, specific numerical values and materials may be shown as examples, but the other numerical values and materials may be used as long as the effects of the present invention are obtained. In the present specification, a range of description "numerical value A to numerical value B" includes the numerical value A and the numerical value B.

[Lead-acid battery]

A lead-acid battery according to an embodiment of the present invention includes a negative electrode plate containing a negative electrode material, an electrolyte solution, and a positive electrode plate including a positive current collector and a positive electrode material disposed around the positive current collector. The positive current collector includes a metal structure containing a plurality of dendrite arms. An average interval between the plurality of dendrite arms is 20 pm or less. The average interval of the plurality of dendrite arms may be hereinafter referred to as "DAS". The metal structure having a DAS of 20 pm or less may be hereinafter referred to as a "metal structure (M)".

The metal structure containing the dendrite arm includes a portion constituting the dendrite arm and a portion existing between the dendrite arms. As a result of the study, the inventors of the present application have newly found that the corrosion of the positive current collector easily proceeds when the DAS is large. The present invention is based on this new finding.

For example, when the positive current collector is produced by casting, the DAS can be changed by a cooling rate of a metal material (the material of the positive current collector) poured into the mold. For example, it is possible to reduce the DAS by increasing the cooling rate. It is also possible to reduce the DAS by adding S (sulfur) or Se (selenium) to the metal material to be the positive current collector. It is also possible to reduce the DAS by increasing pressure during casting.

At least a portion of the positive current collector around which the positive electrode material is disposed is formed of the metal structure (M). Since at least a portion includes the metal structure (M), corrosion of the at least a portion is suppressed. As a result, corrosion of the positive current collector is suppressed.

The entire positive current collector may include the metal structure (M), or a portion of the positive current collector may be formed of the metal structure (M). For example, at least a portion of a surface of the positive current collector may include the metal structure (M). For example, in the case of a positive current collector used for a clad-type positive electrode plate, a spine includes the metal structure (M). At least a portion (for example, at least a portion of a surface) of the spine may include the metal structure (M). 50 vol% or more, 70 vol% or more, or 90 vol% or more of the spine may include the metal structure (M). 50% or more, 70% or more, or 90% or more of an area of the surface of the spine may include the metal structure (M). Alternatively, the entire spine may be formed of the metal structure (M).

A proportion of the positive current collector including the metal structure (M) can be measured (determined) by the following method. First, the positive current collector is equally divided into ten regions (ten equal parts) so as to have substantially the same volume. Then, for each region, one place is arbitrarily selected, and the DAS for a cross section of the one place is measured by a method described later. Then, a proportion of a region having a DAS of 20 pm or less is determined. This ratio can be defined as a ratio of the metal structure (M) in the positive current collector. An arithmetic mean of the DAS determined for each of the ten regions can be used as a value D1 of one DAS. The value D1 of the DAS can be considered to represent the value of the DAS in the entire positive current collector.

The DAS of the metal structure (M) is 20 pm or less and may be 13 pm or less or 6 pm or less. The DAS may be 1 pm or more or 3 pm or more. These lower limit values and upper limit values can be combined arbitrarily. For example, the DAS may be 1 pm or more and 20 pm or less (for example, 13 pm or less or 6 pm or less), or 3 pm or more and 20 pm or less (for example, 13 pm or less or 6 pm or less). The value of the DAS of the entire positive current collector (the above-described value D1) may be in the range exemplified herein as the value of the DAS of the metal structure (M).

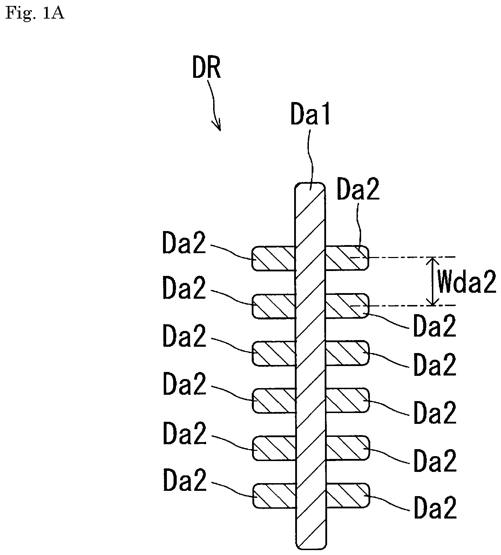

The metal structure (M) includes a dendrite (dendritic crystal). The dendrite generally includes a primary dendrite arm and a secondary dendrite arm. An example of such a dendrite arm is shown schematically in Fig. 1A. For easy understanding, a primary dendrite arm Da1 and a secondary dendrite arm Da2 are hatched in Fig. 1A.

The dendrite DR shown in Fig. 1A includes the primary dendrite arm Da1 and a secondary dendrite arm group. The secondary dendrite arm group includes a plurality of the secondary dendrite arms Da2 extending from the primary dendrite arm Da1. Each of the plurality of secondary dendrite arms extends in a direction intersecting a longitudinal direction of the primary dendrite arm. Fig. 1A shows an arm spacing Wda2 between two adjacent secondary dendrite arms. The DAS can be determined by performing the following measurement on a plurality of secondary dendrite arm groups. In this specification, the DAS regarding the average interval between the secondary dendrite arms is obtained by the following method, and the value is regarded as the average interval between the plurality of dendrite arms of the metal structure (M).

(Measurement of DAS)

DAS is measured by the following method. Hereinafter, a case where the positive current collector includes the spine will be described; however, the positive current collector including no spine can also be measured by the same method.

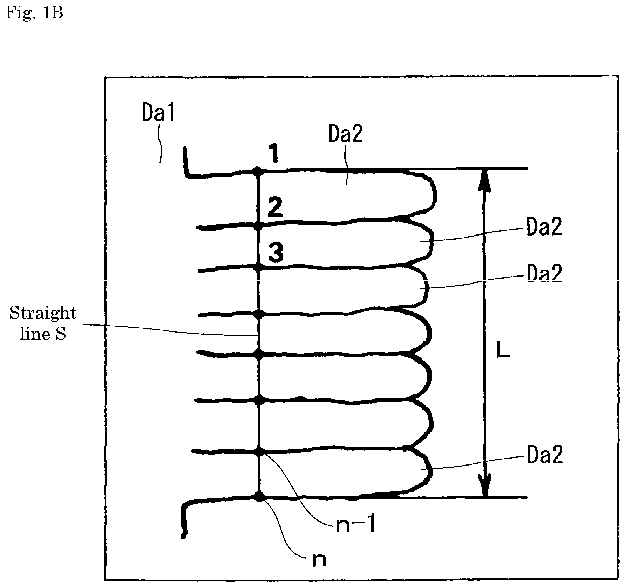

First, the spine is immersed in a resin such as an epoxy resin to cure the resin. Next, the spine is cut together with the cured resin to expose a cross section of the spine. Subsequently, the cross section is polished, and the metal structure is exhibited by etching treatment. The etching treatment is performed with a mixed solution of lactic acid and hydrogen peroxide water. Next, a photograph of the metal structure is taken using a metallographic microscope to obtain an image of the metal structure. In the obtained image, five places (secondary dendrite arm group) where at least three or more dendrite arms are aligned are arbitrarily selected. Then, a distance L from one end to the other end of the selected secondary dendrite arm group is measured. Fig. 1B shows a view for explaining the measurement.

Fig. 1B shows a portion of an example in which $(n-1)$ secondary dendrite arms Da2 are aligned to form one secondary dendrite arm group. For the measurement of the DAS, a straight line S that intersects the $(n-1)$ secondary dendrite arms is drawn on an image, as shown in Fig. 1B. The straight line S is drawn parallel to a direction in which the secondary dendrite arms Da2 are arranged. In other words, the straight line S is drawn to extend in a direction substantially orthogonal to a direction in which each of the secondary dendrite arms extends. In Fig. 1B, an intersection between the straight line S and a boundary of the secondary dendrite arm is numbered 1 to n. Among the intersections between the boundaries of the aligned $(n-1)$ secondary dendrite arms and the straight line S, the distance L between two intersections at both ends is measured.

Then, the distance L is similarly measured for the secondary dendrite arm groups at the five places selected as described above. In this way, the number of dendrite arms $(n_i - 1)$ and $L_i$ are obtained for each of the secondary dendrite arm groups at the five places. Here, i represents the number of the secondary dendrite arm group, and corresponds to each of the selected five places. That is, when the secondary dendrite arm groups at the five places are measured, i = 1 to 5.

An average value of the intervals between the secondary dendrite arms in the i-th secondary dendrite arm group is obtained by $L_i/(n_i - 1)$. Thus, when the secondary dendrite arm groups at m places are measured, the DAS is obtained by the following formula (1). When the DAS obtained by measuring the secondary dendrite arm groups at five locations is obtained, m in the formula (1) may be replaced with 5.

[Mathematical formula 1]

$$DAS = \left( \frac{L_1}{n_1 - 1} + \frac{L_2}{n_2 - 1} + \cdots + \frac{L_m}{n_m - 1} \right) \Big/ m$$

$$= \left( \sum_{i=1}^{m} \frac{L_i}{n_i - 1} \right) \Big/ m \qquad (1)$$

An example of a relationship between the cooling rate and the DAS at the time of casting the positive current collector is shown in Table 1. The cooling rate in Table 1 is determined by measuring an amount of temperature decrease per unit time when the material of the positive current collector in a molten state (liquid phase single phase) is cooled.

[Table 1]

| Cooling rate ($K \cdot s^{-1}$) | 135.4 | 107.1 | 62.0 | 35.9 | 11.1 | 6.4 |
|---|---|---|---|---|---|---|
| DAS($\mu$m) | 3 | 6 | 13 | 20 | 35 | 42 |

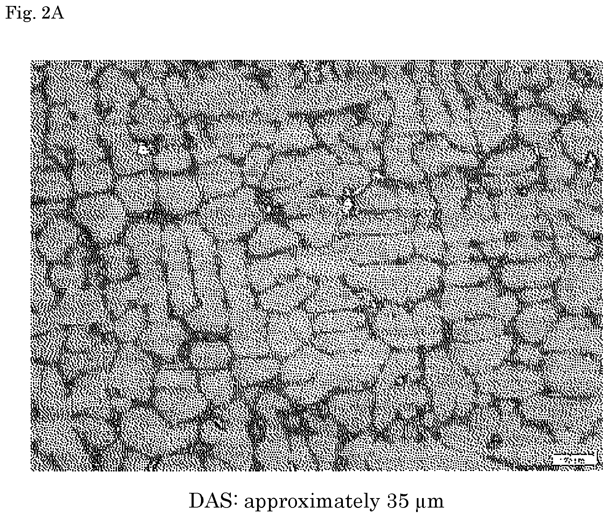

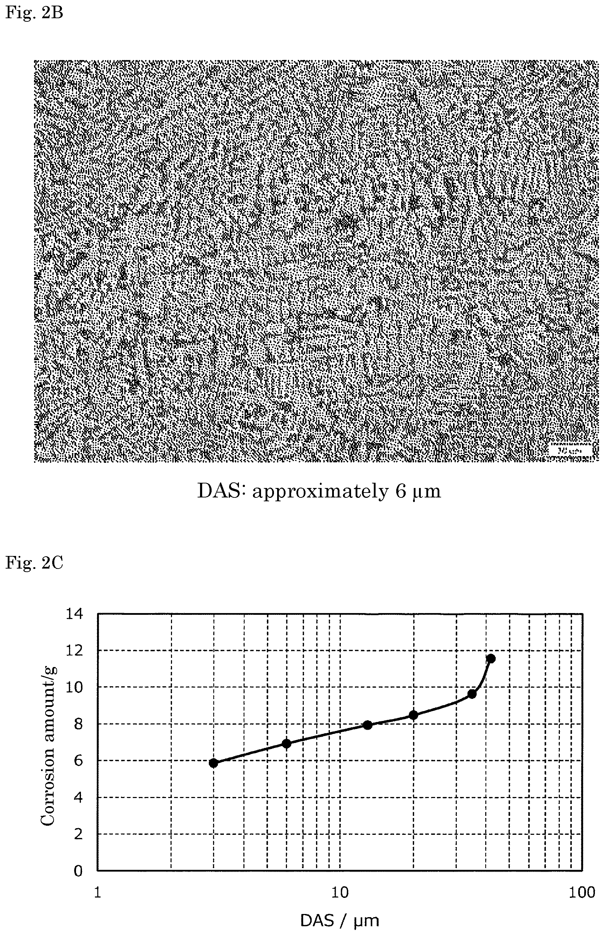

Fig. 2A shows an example of an image of the metal structure when the positive current collector is produced at a cooling rate of 11.1 $K \cdot s^{-1}$. The DAS of the metal structure shown in Fig. 2Ais about 35 pm. Fig. 2B shows an example of an image of the metal structure when the positive current collector is produced at a cooling rate of 107.1 $K \cdot s^{-1}$. The DAS of the metal structure shown in Fig. 2B is about 6 pm. The material of the positive current collector in these images is a Pb-Sb alloy having an Sb content ratio of 5% by mass.

A relationship between an amount of corrosion (g) of the positive current collector with the DAS is shown in Fig. 2C. Data of Fig. 2C is the corrosion amount (g) obtained from a mass change amount of the positive current collector in an overcharge corrosion test. As shown in Fig. 2C, by setting the DAS to 20 pm or less, the corrosion amount of the positive current collector can be largely suppressed.

In the lead-acid battery according to an embodiment of the present invention, the negative electrode plate, the electrolyte solution, and the positive electrode plate are arranged in a container. The lead-acid battery according to an embodiment of the present invention may be either a valve regulated (sealed) lead-acid battery (VRLA type lead-acid battery) or a flooded-type (vented) lead-acid battery. The lead-acid battery according to an embodiment of the present invention can be used for any application, and may be used for, for example, a storage battery for an electric vehicle (forklift, etc.), and a storage battery for other vehicles (automobile, motorcycle, etc.).

In the present specification, the fully charged state of the flooded-type lead-acid battery is defined by the definition of JIS D 5301:2006. More specifically, the following state is defined as a fully charged state: the lead-acid battery is charged with electricity in a water bath at 25°C $\pm$ 2°C at a current (A) to be 0.2 time the numerical value of Ah described as the rated capacity until the terminal voltage during charge measured every 15 minutes or the electrolyte solution density subjected to temperature correction to 20°C exhibits a constant value at three significant digits continuously three times. The numerical value described as the rated capacity is a numerical value in which the unit is Ah. The unit of the current set based on the numerical value indicated as the rated capacity is A.

The lead-acid battery in the fully charged state refers to a battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

Hereinafter, the lead-acid battery according to an embodiment of the present invention will be described for each of the main constituent elements.

(Positive electrode plate)

The positive electrode plate of a lead-acid battery can be classified into a paste type, a clad type, and the like. The paste-type positive electrode plate includes a positive current collector and a positive electrode material. The positive electrode material is held by the positive current collector. In the paste-type positive electrode plate, the positive electrode material is a portion excluding the positive current collector from the positive electrode plate. The positive current collector can be formed using a lead alloy, and may be formed by casting a lead alloy. The positive current collector of the paste-type positive electrode plate may be a grid-like current collector.

An example of the clad-type positive electrode plate includes a plurality of porous tubes, a spine inserted into each tube, a current collector coupling the plurality of spines, a positive electrode material (including a positive active material) filled in each tube and disposed around the spine, and a joint connecting the plurality of tubes. In the clad-type positive electrode plate, the positive electrode material is a material obtained by removing the tube, the spine, the current collector, and the joint. In the specification of the clad-type positive electrode plate, the spine and the current collector may be collectively referred to as a positive current collecting member. The spine functions as a positive current collector.

A member such as a mat or pasting paper may be stuck to the positive electrode plate. Such a member (sticking member) is used integrally with the positive electrode plate and is thus assumed to be included in the positive electrode plate. When the positive electrode plate includes such a member, the positive electrode material is obtained by removing the positive current collector and the sticking member from the positive electrode plate in the paste-type positive electrode plate.

(Positive current collector)

The positive current collector is formed using a lead alloy. As a lead alloy used for the positive current collector, a Pb-Sb-based alloy is preferable in terms of corrosion resistance and mechanical strength. The positive current collector may include a surface layer. The surface layer and the inner layer of the positive current collector may have different compositions. The surface layer may be formed in a part of the positive current collector. At least a portion of the surface layer may be structured by the metal structure (M).

The positive electrode material contained in the positive electrode plate contains a positive active material (lead dioxide or lead sulfate) that exhibits a capacity through a redox reaction. The positive electrode material may contain another additive if necessary.

A non-formed paste-type positive electrode plate is obtained by disposing a positive electrode paste around a positive current collector, and curing and drying the paste. The positive electrode paste is prepared by mixing lead powder, an additive, water, and sulfuric acid. A non-formed clad-type positive electrode plate is prepared by filling a porous tube, into which a spine connected by a current collector is inserted with a lead powder or a slurry-like lead powder, and joining a plurality of tubes with a joint. Thereafter, the positive electrode plate is obtained by forming the non-formed positive electrode plates. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

The positive current collector may be made of an alloy containing Pb and Sb. In this case, a content ratio of Sb in the positive current collector may be 3.5% by mass or more or 5% by mass or more, and may be 10% by mass or less or 8% by mass or less. The content ratio may be, for example, 3.5% by mass or more and 10% by mass or less, or 5% by mass or more and 8% by mass or less.

When the positive current collector is made of an alloy containing Pb and Sb, the alloy may contain trace components other than Pb and Sb. The content ratio of such a trace component may be more than 0% by mass and 1% by mass or less (for example, more than 0% by mass and 0.5% by mass or less). Examples of such trace components include As, S, Se, Sn, and Ag.

As described above, the positive electrode plate may be a clad-type positive electrode plate. In this case, the positive current collector may include a spine. The spine has a bar shape (for example, a round bar shape) extending thin and long. A diameter of the spine (a diameter of the round bar-shaped spine) may be 2.4 mm or more or 2.7 mm or more, and may be less than 3.6 mm or 3.3 mm or less. For example, the diameter may be 2.4 mm or more and less than 3.6 mm, or 2.7 mm or more and 3.3 mm or less.

A length of the spine is not particularly limited, and is selected according to the size of the positive electrode plate. The length of the spine may be, for example, 100 mm or more and 400 mm or less.

(Method of analyzing composition of positive current collector)

Quantification of elements other than lead contained in the positive current collector can be analyzed in accordance with lead separation inductively coupled plasma atomic emission spectroscopy described in JIS H 2105. When analyzing the content of elements contained in the positive current collector of the positive electrode plate taken out from the lead-acid battery, first, vibration is applied to the positive electrode plate to cause the positive electrode material to fall off from the positive current collector, then the positive electrode material remaining around the positive current collector is removed using a ceramic knife. Thereafter, a part of a portion having metallic luster of the positive current collector is collected as a sample, and the mass thereof is measured. The collected sample is dissolved with tartaric acid and dilute nitric acid to obtain an aqueous solution. Hydrochloric acid is added to the obtained aqueous solution to precipitate lead chloride, and the filtrate was collected by filtration. The elements in the filtrate are analyzed by a calibration curve method using an inductively coupled plasma (ICP) emission spectrometer (for example, ICPS-8000 manufactured by Shimadzu Corporation). From the above analysis results, the content ratio (% by mass) of the element in the positive current collector is determined.

(Negative electrode plate)

The negative electrode plate includes a negative current collector and a negative electrode material. The negative electrode material is a portion obtained by removing the negative current collector from the negative electrode plate. The negative electrode material may contain an organic condensate as an organic expander.

A member such as a mat or a pasting paper may be stuck to the negative electrode plate. Such a member (sticking member) is used integrally with the negative electrode plate and is thus assumed to be included in the negative electrode plate. When the negative electrode plate includes the sticking member, the negative electrode material excludes the negative current collector and the sticking member. However, when the sticking member such as a mat is attached to a separator, a thickness of the sticking member is included in a thickness of the separator.

The negative electrode plate can be prepared in such a manner that a negative current collector is coated or filled with a negative electrode paste, which is then cured and dried to prepare a non-formed negative electrode plate, and thereafter, the non-formed negative electrode plate is formed. The negative electrode paste is prepared by adding water and sulfuric acid to lead powder and an organic expander, and various additives as necessary, and kneading the mixture. At the time of curing, it is preferable to cure the non-formed negative electrode plate at a higher temperature than room temperature and high humidity.

The formation can be performed by charging the element with electricity in a state where the element including the non-formed negative electrode plate is immersed in the electrolyte solution containing sulfuric acid in the container of the lead-acid battery. However, the chemical conversion may be performed before the lead-acid battery or the element is assembled. The formation produces spongy lead.

(Negative current collector)

The negative current collector may have a frame rib portion having lugs and a grid portion connected to the frame rib portion. The grid portion may have a plurality of quadrangular squares.

The negative current collector may be obtained by casting lead (Pb) or a lead alloy, or may be obtained by processing a lead sheet or a lead alloy sheet. Examples of the processing method include expanding processing and punching processing. Examples of the current collector include a grid-like current collector generally called a grid, a current collector obtained by punching a circle or an ellipse, and a current collector in which a grid is provided radially from a lug part of the current collector. A current collector that is not grid-like may also be called a grid. It is preferable to use a negative grid as the negative current collector because the negative electrode material is easily supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug may contain Sn or an Sn alloy.

(Negative electrode material)

The negative electrode material contains a negative active material (lead or lead sulfate) that exhibits a capacity through a redox reaction. The negative electrode material may contain an expander, a carbonaceous material, and/or other additives. Examples of the additives include barium sulfate and fibers (resin fibers and the like), but are not limited thereto. Note that the negative active material in the charged state is spongy lead, but the non-formed negative electrode plate is usually prepared using lead powder.

The negative electrode material may include a polymer compound. Hereinafter, the polymer compound may be referred to as a "polymer compound (P)".

A first example of the polymer compound (P) is a polymer compound having a peak in a range of 3.2 ppm or more and 3.8 ppm or less in a chemical shift of a $^1$H-NMR spectrum measured using deuterated chloroform as a solvent. In this specification, unless otherwise specified, the $^1$H-NMR spectrum is a spectrum measured using deuterated chloroform as a solvent. A second example of the polymer compound (P) is a polymer compound containing a repeating structure of oxy $C_{2-4}$ alkylene units. The polymer compound contained in the first example of the polymer compound (P) and the polymer compound contained in the second example of the polymer compound (P) overlap at least partially. As the polymer compound (P), a commercially available polymer compound may be used. Alternatively, the polymer compound (P) may be synthesized by a known method.

In the lead-acid battery, water in the electrolyte solution is electrolyzed by the negative electrode plate during charging to generate hydrogen gas. When the amount of overcharge is large, a reduction amount of the electrolyte solution due to electrolysis of water increases. When the amount of overcharge is large, deterioration of a positive current collector is promoted. As a result, the life of the lead-acid battery is reduced. Thus, in the lead-acid battery, it is particularly important to reduce the amount of overcharge. By adding the polymer compound (P) to the negative electrode material, the amount of overcharge can be suppressed.

The reason why the amount of overcharge can be reduced by the polymer compound (P) is considered to be as follows. Since the polymer compound (P) contains the repeating structure of oxy $C_{2-4}$ alkylene units and the like, the polymer compound (P) easily takes a linear structure. Thus, the polymer compound (P) added to the negative electrode material thinly and widely covers a surface of lead in the negative electrode material. By covering the surface of lead with the polymer compound (P), a hydrogen overvoltage increases, and as a result, a side reaction in which hydrogen is generated during overcharge hardly occurs. On the other hand, when an amount of the polymer compound (P) added is large, the charge acceptance may be deteriorated. In the present invention, the content ratio of the polymer compound (P) in a central portion of the negative electrode plate in which an amount of hydrogen gas generated during overcharge is large is high. Thus, it is possible to effectively reduce the amount of overcharge while suppressing the amount of the polymer compound (P) in the entire negative electrode plate. That is, according to the present invention, it is possible to achieve high charge acceptance performance and a low amount of overcharge.

(Polymer compound (P))

The polymer compound (P) has a peak in a range of 3.2 ppm or more and 3.8 ppm or less in a chemical shift of $^1$H-NMR spectrum. The polymer compound (P) as described above has the oxy $C_{2-4}$ alkylene unit. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, and an oxy 1,3-butylene unit. The polymer compound (P) may have one kind or two or more kinds of such oxy $C_{2-4}$ alkylene units.

The polymer compound (P) preferably contains a repeating structure of oxy $C_{2-4}$ alkylene units. The repeating structure may contain one kind of oxy $C_{2-4}$ alkylene unit, or may contain two or more kinds of oxy $C_{2-4}$ alkylene units. The polymer compound (P) may contain one kind of the repeating structure or two or more kinds of the repeating structures.

The polymer compound (P) having a repeating structure of oxy $C_{2-4}$ alkylene units also includes those classified as a surfactant (more specifically, a nonionic surfactant).

Examples of the polymer compound (P) include hydroxy compounds having a repeating structure of oxy $C_{2-4}$ alkylene units (poly $C_{2-4}$ alkylene glycols, copolymers containing a repeating structure of oxy $C_{2-4}$ alkylene, poly $C_{2-4}$ alkylene oxide adducts of a polyol, and the like), and etherified or esterified products of these hydroxy compounds.

Examples of the copolymer include copolymers containing different oxy $C_{2-4}$ alkylene units. The copolymer may be a block copolymer.

The polyol may be any of an aliphatic polyol, an alicyclic polyol, an aromatic polyol, a heterocyclic polyol, and the like. From the viewpoint that the polymer compound (P) easily spreads thinly on the lead surface, aliphatic polyols, alicyclic polyols (for example, polyhydroxycyclohexane, polyhydroxynorbornane, and the like), and the like are preferable, and among them, aliphatic polyols are preferable. Examples of the aliphatic polyol include aliphatic diols and polyols of triol or higher (for example, glycerin, trimethylolpropane, pentaerythritol, sugar alcohol, and the like), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar alcohol include erythritol, xylitol, mannitol, and sorbitol. In the polyalkylene oxide adduct of the polyol, the alkylene oxide corresponds to the oxy $C_{2-4}$ alkylene unit of the polymer compound (P) and contains at least $C_{2-4}$ alkylene oxide. From the viewpoint that the polymer compound (P) easily take a linear structure, the polyol is preferably a diol.

The etherified product has an -OR$^2$ group obtained by etherifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein R$^2$ is an organic group). Among terminals of the polymer compound (P), some terminals may be etherified, or all terminals may be etherified. For example, one terminal of a main chain of the linear polymer compound (P) may be an -OH group, and the other terminal may be an -OR$^2$ group.

The esterified product has an -O-C(=O)-R$^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein R$^3$ is an organic group). Among terminals of the polymer compound (P), some terminals may be esterified, or all terminals may be esterified. For example, one terminal of a main chain of the linear polymer compound (P) may be an -OH group, and the other terminal may be an -O-C(=O)-R$^3$ group.

Examples of each of the organic groups R$^2$ and R$^3$ include a hydrocarbon group. The hydrocarbon group may have a substituent (for example, a hydroxy group, an alkoxy group, and/or a carboxy group, and the like). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, an alkynyl group, or the like) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group and a naphthyl group. Examples of the bisaryl group include monovalent groups corresponding to bisarene. Examples of the bisarene include biphenyl and bisarylalkanes (for example, bis C$_{6\text{-}10}$ aryl C$_{1\text{-}4}$ alkanes (such as 2,2-bisphenylpropane), and the like).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), and cycloalkenyl groups (cyclohexenyl group, cyclooctenyl group, and the like). The alicyclic hydrocarbon group also includes hydrogenated products of the aromatic hydrocarbon groups.

Among the hydrocarbon groups, an aliphatic hydrocarbon group is preferable from the viewpoint that the polymer compound (P) easily adheres thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, and a trienyl group having three carbon-carbon double bonds. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more trienyl group, depending on the type of the aliphatic hydrocarbon group. Among them, an alkyl group and an alkenyl group are preferable from the viewpoint that the polymer compound (P) easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-nonyl, n-decyl, i-decyl, undecyl, lauryl (dodecyl), tridecyl, myristyl, pentadecyl, cetyl, heptadecyl, stearyl, icosyl, henicosyl, and behenyl.

Specific examples of the alkenyl group include vinyl, 1-propenyl, allyl, cis-9-heptadecen-1-yl, palmitoleyl, and oleyl. An alkenyl group may be, for example, a C$_{2\text{-}30}$ alkenyl group or a C$_{2\text{-}26}$ alkenyl group, a C$_{2\text{-}22}$ alkenyl group or a C$_{2\text{-}20}$ alkenyl group, or a C$_{10\text{-}20}$ alkenyl group.

When at least one selected from the group consisting of an etherified product of a hydroxy compound having a repeating structure of oxy C$_{2\text{-}4}$ alkylene units and an esterified product of a hydroxy compound having a repeating structure of oxy C$_{2\text{-}4}$ alkylene units are used among the polymer compounds (P), it is preferable because the effect of suppressing the deterioration of the charge acceptance can be further enhanced. Even when these polymer compounds (P) are used, the amount of overcharge can be reduced. Among the polymer compounds (P) as described above, those having a repeating structure of oxypropylene units, those having a repeating structure of oxyethylene units, and the like are preferable.

The polymer compound (P) may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include those having 8 or more carbon atoms among the above-mentioned aliphatic hydrocarbon groups (such as alkyl groups and alkenyl groups), those having 12 or more carbon atoms is preferable, and those having 16 or more carbon atoms is more preferable. Among them, the polymer compound (P) having a long-chain aliphatic hydrocarbon group is preferable because it hardly causes excessive adsorption to lead and the effect of suppressing the deterioration of the charge acceptance is further enhanced. In the polymer compound (P), at least one of the hydrophobic groups may be a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds (P), those having a hydrophilic group and a hydrophobic group correspond to a nonionic surfactant. The repeating structure of oxyethylene units exhibits high hydrophilicity and can be a hydrophilic group in the nonionic surfactant. Thus, the polymer compound (P) having a hydrophobic group preferably contains a repeating structure of oxyethylene units. The polymer compound (P) as described above can suppress excessive coverage of the surface of lead while being selectively adsorbed to lead due to a balance between hydrophobicity and high hydrophilicity due to the repeating structure of oxyethylene units, and thus, it is possible to further enhance the effect of suppressing the deterioration of the charge acceptance while reducing the amount of overcharge. The polymer compound (P) as described above can ensure high adsorptivity to lead even with a relatively low molecular weight (for example, Mn is 1000 or less).

Among the polymer compounds (P), a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

Examples of the polymer compound (P) having a hydrophobic group and containing a repeating structure of oxyethylene units include etherified products of polyethylene glycol (such as alkyl ether), esterified products of polyethylene glycol (such as carboxylic acid ester), etherified products (such as alkyl ether) of a polyethylene oxide adduct of the polyol, and esterified products of a polyethylene oxide adduct (such as carboxylic acid ester) of the polyol (such as polyols of triol or higher). Specific examples of the polymer compound (P) as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether, but are not limited thereto. Among them, use of an esterified product of polyethylene glycol, an esterified product of a polyethylene oxide adduct of the polyol, and the like is preferable because higher charge acceptance can be secured and the amount of overcharge can be remarkably reduced.

For the polymer compound (P) classified as a surfactant, the HLB of the polymer compound (P) is preferably 4 or more, and more preferably 4.3 or more from the viewpoint of further easily reducing the reduction amount of the electrolyte solution. From the viewpoint of easily securing higher charge acceptance, the HLB of the polymer compound (P) is preferably 18 or less, more preferably 10 or less or 9 or less, and still more preferably 8.5 or less.

The HLB of the polymer compound (P) may be 4 or more (or 4.3 or more) and 18 or less, or 4 or more (or 4.3 or more) and 10 or less. From the viewpoint of achieving an excellent balance between reduction of the amount of overcharge and improvement of charge acceptance, the HLB of the polymer compound (P) is preferably 4 or more (or 4.3 or more) and 9 or less, or 4 or more (or 4.3 or more) and 8.5 or less.

HLB stands for Hydrophile Lipophile Balance, and is a numerical value representing the balance between hydrophobicity and hydrophilicity of a surfactant (predominantly a nonionic surfactant). The HLB value of the polymer compound (P) is determined by a Griffin method.

From the viewpoint of further enhancing the effect of reducing the amount of overcharge and easily securing higher charge acceptance, the case where the repeating structure of oxy $C_{2-4}$ alkylene includes at least a repeating structure of oxypropylene units is also preferable. In this case, although the charge acceptance tends to be lower than that in the case of the repeating structure of oxyethylene units, even in this case, high charge acceptance can be secured while the amount of overcharge is kept low. The polymer compound (P) containing the oxypropylene unit has peaks derived from -CH< and -CH$_2$- of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound (P) has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from -CH$_2$-, and the peak in the range of more than 3.42 ppm and 3.8 ppm or less is derived from -CH< and -CH$_2$-.

Examples of the polymer compound (P) containing at least a repeating structure of oxypropylene units include polypropylene glycol, a copolymer containing a repeating structure of oxypropylene units, a polypropylene oxide adduct of the polyol, and etherified or esterified products thereof. Examples of the copolymer include an oxypropylene-oxyalkylene copolymer (provided that oxyalkylene is $C_{2-4}$ alkylene other than oxypropylene). Examples of the oxypropylene-oxyalkylene copolymer include an oxypropylene-oxyethylene copolymer and an oxypropylene-oxytrimethylene copolymer. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, and alkyl ether of an oxypropylene-oxyalkylene copolymer (such as alkyl ether of polyoxypropylene-polyoxyethylene copolymer). Examples of the esterified product include polypropylene glycol ester of carboxylic acid, and carboxylic acid ester of an oxypropylene-oxyalkylene copolymer (such as carboxylic acid ester of polyoxypropylene-polyoxyethylene copolymer).

Examples of the polymer compound (P) containing at least a repeating structure of oxypropylene units include polypropylene glycol, a polyoxypropylene-polyoxyethylene copolymer (such as a polyoxypropylene-polyoxyethylene block copolymer), a polyoxyethylene-polyoxypropylene alkyl ether (such as alkyl ether (such as butyl ether) in which the R2 is an alkyl having 10 or less carbon atoms (or 8 or less or 6 or less carbon atoms)), a polypropylene glycol carboxylate (such as polypropylene glycol carboxylate (such as polypropylene glycol acetate) in which the $R^3$ is an alkyl having 10 or less carbon atoms (or 8 or less or 6 or less carbon atoms)), and a polypropylene oxide adduct of polyol of triol or higher (such as polypropylene oxide adduct of glycerin), but are not limited thereto.

In the polymer compound (P) containing a repeating structure of the oxypropylene unit, the proportion of the oxypropylene unit is, for example, 5 mol% or more, and may be 10 mol% or more or 20 mol% or more. The proportion of the oxypropylene unit is, for example, 100 mol% or less. In the copolymer, the proportion of the oxypropylene unit may be 90 mol% or less, 75 mol% or less, or 60 mol% or less.

In the polymer compound (P) containing a repeating structure of oxypropylene units, the proportion of the oxypropylene unit may be 5 mol% or more and 100 mol% or less (or 90 mol% or less), 10 mol% or more and 100 mol% or less (or 90 mol% or less), 20 mol% or more and 100 mol% or less (or 90 mol% or less), 5 mol% or more and 75 mol% or less (or 60 mol% or less), 10 mol% or more and 75 mol% or less (or 60 mol% or less), or 20 mol% or more and 75 mol% or less (or 60 mol% or less).

It is preferable that the polymer compound (P) contains a large amount of oxy $C_{2-4}$ alkylene units from the viewpoint of enhancing adsorptivity to lead and easily taking a linear structure. Such a polymer compound (P) includes, for example, an oxygen atom bonded to a terminal group and a $-CH_2-$ group and/or a -CH< group bonded to the oxygen atom. In the $^1$H-NMR spectrum of the polymer compound (P), the ratio of the integrated value of the peak of 3.2 ppm to 3.8 ppm to the sum of the integrated value of this peak, the integrated value of the peak of the hydrogen atoms of the $-CH_2-$ group, and the integrated value of the peak of the hydrogen atom of the -CH< group increases. This ratio is, for example, 50% or more, and may be 80% or more. From the viewpoint of further enhancing the effect of reducing the amount of overcharge and easily securing higher charge acceptance, the above ratio is preferably 85% or more, and more preferably 90% or more. For example, when the polymer compound (P) has an -OH group at a terminal and also has a $-CH_2-$ group or a -CH< group bonded to an oxygen atom of the -OH group, in the $^1$H-NMR spectrum, the peaks of the hydrogen atoms of the $-CH_2-$ group and the -CH< group have a chemical shift in a range of more than 3.8 ppm and 4.0 ppm or less.

The negative electrode material may contain one kind or two or more kinds of the polymer compounds (P).

The polymer compound (P) may contain, for example, a compound having Mn of 5,000,000 or less, 3,000,000 or less, or 2,000,000 or less, 500,000 or less or 100,000 or less, or 50,000 or less or 20,000 or less. From the viewpoint of securing higher charge acceptance, the polymer compound (P) preferably contains a compound having Mn of 10,000 or less, may contain 5,000 or less, 4,000 or less, 3,000 or less or 2,500 or less. The Mn of such a compound may be 300 or more, 400 or more, or 500 or more. From the viewpoint of further enhancing the effect of reducing the amount of overcharge, Mn of such a compound is preferably 1,000 or more, and more preferably 1,500 or more, or 1,800 or more. As the polymer compound (P), two or more compounds having different Mn may be used. That is, the polymer compound (P) may have a plurality of peaks of Mn in the distribution of the molecular weight.

Mn of the compound may be 300 or more (or 400 or more) and 5,000,000 or less, 300 or more (or 400 or more) and 3,000,000 or less, 300 or more (or 400 or more) and 2,000,000 or less, 300 or more (or 400 or more) and 500,000 or less, 300 or more (or 400 or more) and 100,000 or less, 300 or more (or 400 or more) and 50,000 or less, 300 or more (400 or more) and 20,000 or less, 300 or more (or 400 or more) and 10,000 or less, 300 or more (or 400 or more) and 5,000 or less, 300 or more (or 400 or more) and 4,000 or less, 300 or more (or 400 or more) and 3,000 or less, 300 or more (or 400 or more) and 2,500 or less, 500 or more (or 1,000 or more) and 5,000,000 or less, 500 or more (or 1,000 or more) and 3,000,000 or less, 500 or more (or 1,000 or more) and 2,000,000 or less, 500 or more (or 1,000 or more) and 500,000 or less, 500 or more (or 1,000 or more) and 100,000 or less, 500 or more (or 1,000 or more) and 50,000 or less, 500 or more (or 1,000 or more) and 20,000 or less, 500 or more (or 1,000 or more) and 10,000 or less, 500 or more (or 1,000 or more) and 5,000 or less, 500 or more (or 1,000 or more) and 4,000 or less, 500 or more (or 1,000 or more) and 3,000 or less, 500 or more (or 1,000 or more) and 2,500 or less, 1,500 or more (or 1,800 or more) and 5,000,000 or less, 1,500 or more (or 1,800 or more) and 3,000,000 or less, 1,500 or more (or 1,800 or more) and 2,000,000 or less, 1,500 or more (or 1,800 or more) and 500,000 or less, 1,500 or more (or 1,800 or more) and 100,000 or less, 1,500 or more (or 1,800 or more) and 50,000 or less, 1,500 or more (or 1,800 or more) and 20,000 or less, 1,500 or more (or 1,800 or more) and 10,000 or less, 1,500 or more (or 1,800 or more) and 5,000 or less, 1,500 or more (or 1,800 or more) and 4,000 or less, 1,500 or more (or 1,800 or more) and 3,000 or less, or 1,500 or more (or 1,800 or more) and 2,500 or less.

The content of the polymer compound (P) in the negative electrode material is, for example, 8 ppm or more and may be 10 ppm or more on a mass basis. From the viewpoint of further enhancing the effect of reducing the amount of overcharge, the content of the polymer compound (P) in the negative electrode material is preferably 20 ppm or more, more preferably 30 ppm or more on a mass basis. The content of the polymer compound (P) in the negative electrode material is, for example, 1,000 ppm or less, may be less than 1,000 ppm, 700 ppm or less, 600 ppm or less, or 500 ppm or less on a mass basis. From the viewpoint of easily securing higher charge acceptance, the content of the polymer compound (P) in the negative electrode material is preferably 400 ppm or less, more preferably 300 ppm or less, 200 ppm or less, 160 ppm or less, 150 ppm or less, 120 ppm or less, or 100 ppm or less on a mass basis.

The content of the polymer compound (P) in the negative electrode material (on a mass basis) is 8 ppm or more (or 10 ppm or more) and 1,000 ppm or less, 8 ppm or more (or 10 ppm or more) and less than 1,000 ppm, 8 ppm or more (or 10 ppm or more) and 700 ppm or less, 8 ppm or more (or 10 ppm or more) and 600 ppm or less, 8 ppm or more (or 10 ppm or more) and 500 ppm or less, 8 ppm or more (or 10 ppm or more) and or 400 ppm or less, 8 ppm or more (or 10 ppm or more) and 300 ppm or less, 8 ppm or more (or 10 ppm or more) and 200 ppm or less, 8 ppm or more (or 10 ppm or more) and 160 ppm or less, 8 ppm or more (or 10 ppm or more) and 150 ppm or less, 8 ppm or more (or 10 ppm or more) and 120 ppm or less, 8 ppm or more (or 10 ppm or more) and 100 ppm or less, 20 ppm or more (or 30 ppm or more) and 1,000 ppm or less, 20 ppm or more (or 30 ppm or more) and less than 1,000 ppm, 20 ppm or more (or 30 ppm or more) and 700 ppm or less, 20 ppm or more (or 30 ppm or more) and 600 ppm or less, 20 ppm or more (or 30 ppm or more) and 500 ppm or less, 20 ppm or more (or 30 ppm or more) and 400 ppm or less, 20 ppm or more (or 30 ppm or more) and 300 ppm or less, 20 ppm or more (or 30 ppm or more) and 200 ppm or less, 20 ppm or more (or 30 ppm or more) and 160 ppm or less, 20 ppm or more (or 30 ppm or more) and 150 ppm or less, 20 ppm or more (or 30 ppm or more) and 120 ppm or less, or 20 ppm or more (or 30 ppm or more) and 100 ppm or less.

(Organic expander)

The negative electrode material may contain an organic condensate as an organic expander as described above. As the organic condensate, for example, one synthesized by a known method may be used, or a commercially available product may be used. The negative electrode material may contain one kind of organic expander or two or more kinds of organic expanders. The negative electrode material may contain a lignin compound as an organic expander, and may contain an organic expander other than the lignin compound.

(Barium sulfate)

The negative electrode material can contain barium sulfate. The content ratio of barium sulfate in the negative electrode material is, for example, 0.05% by mass or more and may be 0.10% by mass or more. The content ratio of barium sulfate in the negative electrode material is 3% by mass or less, and may be 2% by mass or less. These lower limit values and upper limit values can be combined arbitrarily.

The content ratio of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

(Carbonaceous material)

The negative electrode material can contain a carbonaceous material. As the carbonaceous material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphite-type crystal structure and may be either artificial graphite or natural graphite. One kind of carbonaceous material may be used singly, or two or more kinds thereof may be used in combination.

The content ratio of the carbonaceous material in the negative electrode material is, for example, preferably 0.05% by mass or more and may be 0.10% by mass or more. The content ratio of the carbonaceous material is, for example, 5% by mass or less and may be 3% by mass or less. These lower limit values and upper limit values can be combined arbitrarily.

The content ratio of the carbonaceous material in the negative electrode material may be, for example, 0.05% by mass or more and 5% by mass or less, 0.05% by mass or more and 3% by mass or less, 0.10% by mass or more and 5% by mass or less, or 0.10% by mass or more and 3% by mass or less.

(Analysis of negative electrode material or constituent components)

Hereinafter, a method of analyzing the negative electrode material or constituent components thereof will be described. Prior to measurement or analysis, the lead-acid battery in the fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at $60 \pm 5°C$ in a reduced pressure environment for about six hours. When the negative electrode plate includes a sticking member, the sticking member is removed as necessary. Next, the negative electrode material is separated from the negative electrode plate to obtain a sample (hereinafter referred to as sample A). The sample A is ground as necessary and subjected to analysis.

(1) Analysis of polymer compound (P)

(1-1) Qualitative analysis of polymer compound (P)

The ground sample A is used. $150.0 \pm 0.1$ mL of chloroform is added to $100.0 \pm 0.1$ g of the sample A, and the mixture is stirred at $20 \pm 5°C$ for 16 hours to extract the polymer compound (P). Thereafter, the solid content is removed by filtration. For a chloroform solution in which the polymer compound (P) obtained by the extraction is dissolved or the polymer compound (P) obtained by drying the chloroform solution, information is obtained from at least one selected from, for example, an infrared spectroscopic spectrum, an ultraviolet-visible absorption spectrum, an NMR spectrum, and LC-MS and pyrolysis GC-MS to identify the polymer compound (P).

Chloroform is distilled off under reduced pressure from the chloroform solution in which the polymer compound (P) obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.

Observation frequency: 395.88 MHz
Pulse width: 6.30 ps
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the -$CH_2$- group and the -CH< group bonded to the oxygen atom bonded to the terminal group of the polymer compound (P), the sum ($V_2$) of integrated values of peaks in the $^1$H-NMR spectrum is determined. Then, from $V_1$ and $V_2$, a ratio of $V_1$ to the sum of $V_1$ and $V_2$ ($= V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in a range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(1-2) Quantitative analysis of polymer compound (P)

An appropriate amount of the chloroform soluble component is dissolved in deuterated chloroform together with tetrachloroethane (TCE) of $m_r$ (g) measured with an accuracy of $\pm 0.0001$ g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound (P) in the negative electrode material is determined from the following formula.

$$C_n = S_a/S_r \times N_r/N_a \times M_a/M_r \times m_r/m \times 1{,}000{,}000$$

(wherein $M_a$ is a molecular weight of a structure showing a peak in a chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.)

Since the reference substance in this analysis is TCE, $N_r = 2$ and $M_r = 168$. In addition, m = 100.

For example, when the polymer compound (P) is polypropylene glycol, $M_a$ is 58, and $N_a$ is 3. When the polymer compound (P) is polyethylene glycol, $M_a$ is 44, and $N_a$ is 4. $N_a$ and $M_a$ are values obtained by averaging $N_a$ values and $M_a$ values of each monomer unit using a molar ratio (mol%) of each monomer unit contained in the repeating structure.

In the quantitative analysis, the integrated value of the peak in the $^1$H-NMR spectrum is determined using data processing software "ALICE" manufactured by JEOL Ltd.

(1-3) Mn measurement of polymer compound (P)

Using the chloroform soluble component, GPC measurement of the polymer compound (P) is performed under the following conditions using the following apparatuses. Separately, a calibration curve (standard curve) is prepared from a plot of Mn of the standard substance and elution time. The Mn of the polymer compound (P) is calculated based on the standard curve and the GPC measurement result of the polymer compound (P). However, the esterified product, the etherified product, and the like may be decomposed in the chloroform soluble component.

Analysis system: 20A system (manufactured by Shimadzu Corporation)

Column: two columns of GPC KF-805L (manufactured by Shodex) connected in series
Temperature: 30°C $\pm$ 1°C
Mobile phase: tetrahydrofuran
Flow rate: 1 mL/min.
Concentration: 0.20% by mass
Injection amount: 10 pL
Standard substance: polyethylene glycol (Mn = 2,000,000, 200,000, 20,000, 2,000, 200)
Detector: differential refractive index detector (Shodex RI-201H, manufactured by Shodex)

(Separator)

The separator can be disposed between the negative electrode plate and the positive electrode plate. As the separator, at least one selected from a nonwoven fabric or a microporous membrane is used. The thickness of separators interposed between the negative electrode plate and the positive electrode plate may be selected in accordance with the distance between the electrodes. The number of separators may be selected according to the number between the electrodes.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components in addition to the fibers, such as acid-resistant inorganic powder, a polymer as a binder, and the like.

Meanwhile, the microporous film is a porous sheet mainly made of components except for fiber components and is obtained by, for example, extrusion molding a composition containing, for example, a pore-forming additive (polymer powder, oil, and/or the like) into a sheet shape and then removing the pore-forming additive to form pores. The microporous film is preferably made of a material having acid resistance and is preferably composed mainly of a polymer component. As the polymer component, a polyolefin (a polyethylene, a polypropylene, etc.) is preferable.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a zig-zag shape, and the positive electrode plate and the negative electrode plate may be sandwiched by the zig-zag-shaped separator such that the separator is interposed therebetween. When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

In the present specification, an up-and-down direction in the plate means the up-and-down direction (vertical direction) when the plate is disposed in the lead-acid battery installed in a normal use state.

(Electrolyte solution)

The electrolyte solution is an aqueous solution containing sulfuric acid and may be gelled as necessary. The electrolyte solution may contain at least one selected from the group consisting of a cation (for example, a metal cation) and an anion (for example, an anion other than a sulfate anion (a phosphate ion, etc.)) as necessary. Examples of the metal cation include at least one selected from the group consisting of a sodium ion, a lithium ion, a magnesium ion, and an aluminum ion.

A specific gravity of the electrolyte solution at 20°C is, for example, 1.20 or more, and may be 1.25 or more, 1.28 or more, or 1.29 or more. The specific gravity of the electrolyte solution at 20°C is 1.35 or less and may be 1.32 or less or 1.31 or less. These lower limit values and upper limit values can be combined arbitrarily. For example, the specific gravity may be 1.28 or more and 1.32 or less, or 1.29 or more and 1.31 or less. The specific gravity of these electrolyte solutions is the specific gravity of the electrolyte solution at 20°C of the battery in the fully charged state.

By increasing the specific gravity of the electrolyte solution, a discharge capacity of the lead-acid battery can be increased. In this respect, the specific gravity of the electrolyte solution is preferably 1.28 or more, and may be 1.29 or more. On the other hand, when the specific gravity of the electrolyte solution is too large, the positive current collector tends to be easily corroded. In this respect, the specific gravity of the electrolyte solution is preferably 1.32 or less, and may be 1.31 or less.

By increasing the specific gravity of the electrolyte solution, it is possible to increase the capacity of the lead-acid battery. However, when the specific gravity of the electrolyte solution is increased, the positive current collector is easily corroded. Thus, conventionally, it has been difficult to achieve both high capacity and high life cycle performance by increasing the specific gravity of the electrolyte solution. However, according to the lead-acid battery of the present embodiment, it is possible to achieve both high capacity and high life cycle performance.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming at least one of the positive electrode plate and the negative electrode plate as necessary after the step of housing the positive electrode plate, the negative electrode plate, and the electrolyte solution in the container. The positive electrode plate, the negative electrode plate, the electrolyte solution, and the separator are each prepared before being housed in the container.

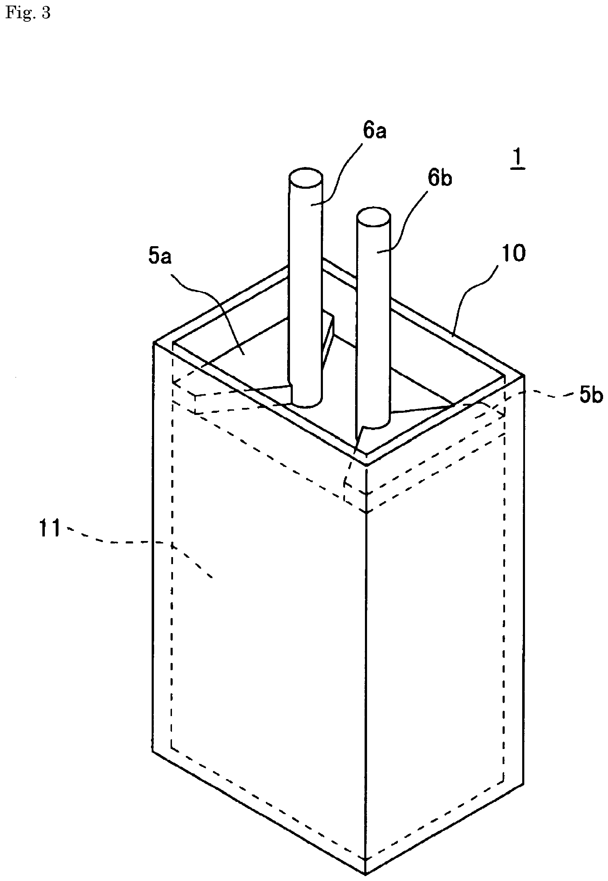

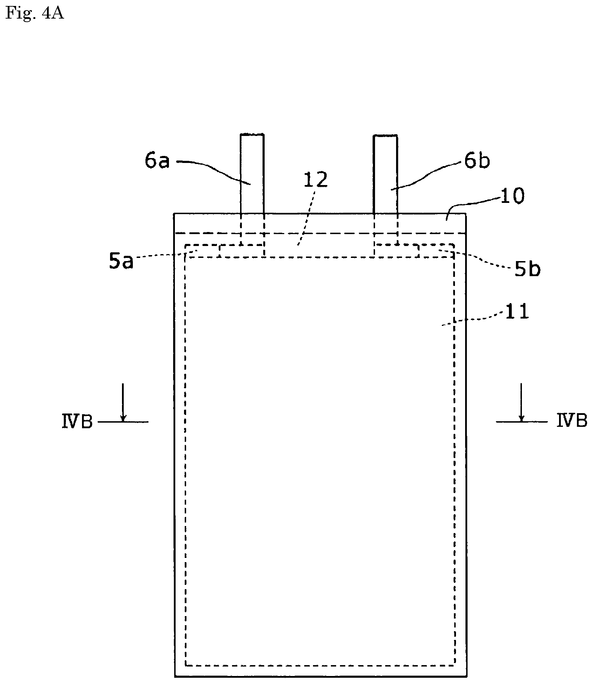

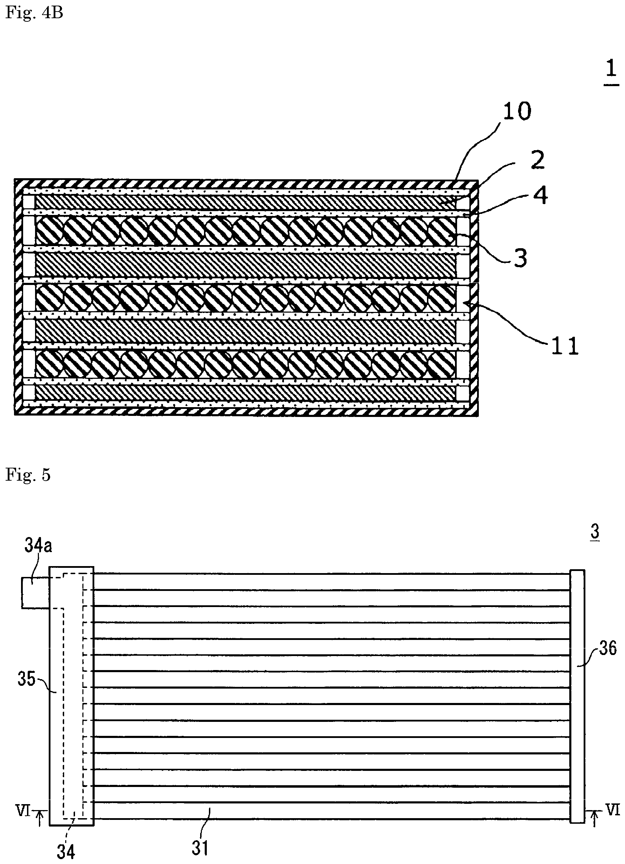

Fig. 3 shows a lead-acid battery 1 as an example of the lead-acid battery according to an embodiment of the present invention. Fig. 3 is a perspective view schematically showing an example in which a lid of the lead-acid battery 1 is removed. The lead-acid battery 1 in Fig. 3 is a clad-type lead-acid battery. Fig. 4A is a front view of the lead-acid battery in Fig. 3. Fig. 4B is a schematic cross-sectional view of a cross section taken along line IVB-IVB in Fig. 4A as viewed from an arrow direction.

The lead-acid battery 1 includes a container 10 that houses an element 11 and an electrolyte solution 12. The element 11 is configured by laminating a plurality of negative electrode plates 2 and clad-type positive electrode plates 3 with a separator 4 interposed therebetween. Here, a state where the sheet-like separator 4 is sandwiched between the negative electrode plate 2 and the positive electrode plate 3 is shown, but the form of the separator is not particularly limited.

An upper portion of each of the plurality of negative electrode plates 2 is provided with a current collection lug (not illustrated) projecting upward. An upper portion of each of the plurality of positive electrode plates 3 is also provided with a current collection lug (not illustrated) projecting upward. Then, the lugs of the negative electrode plates 2 are connected and integrated with each other by a negative electrode strap 5a. Similarly, the lugs of the positive electrode plates 3 are also connected and integrated with each other by a positive electrode strap 5b. A lower end of a negative pole 6a is fixed to an upper portion of the negative electrode strap 5a, and a lower end of a positive pole 6b is fixed to an upper portion of the positive electrode strap 5b.

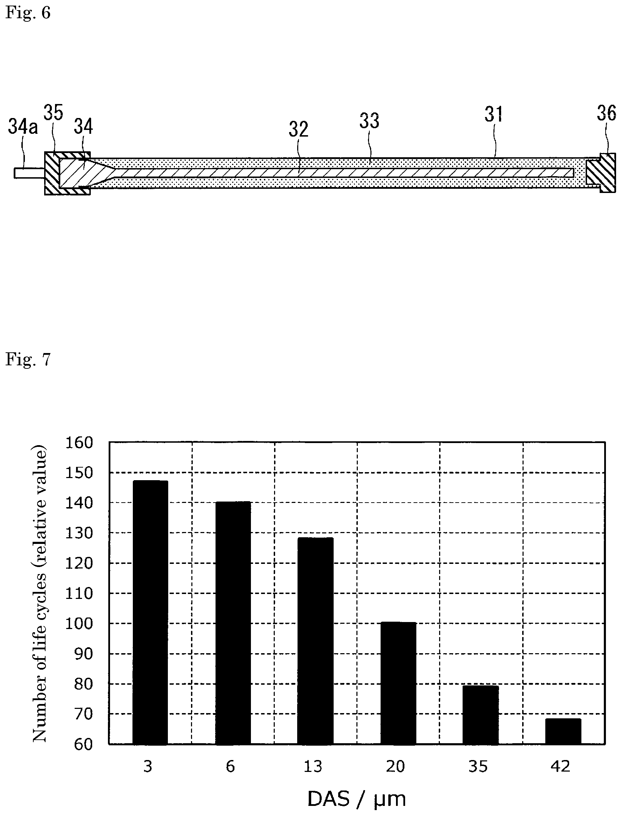

Fig. 5 schematically shows a top view of the clad-type positive electrode plate 3. Fig. 6 is a schematic cross-sectional view of a cross section taken along line VI-VI in Fig. 5 as viewed from the arrow direction. The positive electrode plate 3 includes a plurality of porous tubes 31, a spine (positive current collector) 32 housed in the tube 31, a positive electrode material 33 housed in the tube 31, and a current collector 34 connecting a plurality of the spines 32. One spine 32 is housed in each of the tubes 31, and one end in a length direction of the plurality of spines 32 is connected by the current collector 34 in a state where the plurality of spines 32 are arranged in a line. The plurality of tubes 31 are arranged in a line in a direction perpendicular to a length direction of the tube 31 (from another viewpoint, along a length direction of the current collector 34) in the state where the spine 32 is housed. The current collector 34 and one end of the plurality of tubes 31 on the current collector 34 side are covered with an upper joint 35. An opening of the tube 31 on the current collector 34 side is sealed by one end of the spine 32 on the current collector 34 side and the upper joint 35. A lug 34a for collecting current from the positive electrode plate 3 is formed at one end in the length direction of the current collector 34. The lug 34a projects outward from the upper joint 35. The other ends in the length direction of the plurality of tubes 31 are connected by a lower joint 36. An opening of each of the tubes 31 on the other end side is sealed by the lower joint 36.

The lead-acid battery according to one aspect of the present invention will be collectively described below.

(1) A lead-acid battery including:

a negative electrode plate containing a negative electrode material;
an electrolyte solution; and
a positive electrode plate including a positive current collector and a positive electrode material disposed around the positive current collector,
in which the positive current collector includes a metal structure containing a plurality of dendrite arms, and an average interval between the plurality of dendrite arms is 20 pm or less.

The average interval between the plurality of dendrite arms may be 13 pm or less or 6 pm or less, and may be 1 pm or more or 3 pm or more.

(2) In the lead-acid battery according to (1), the positive current collector may be made of an alloy containing Pb and Sb, and a content ratio of Sb in the alloy may be 3.5% by mass or more and 10% by mass or less.

In this case, a content ratio of Sb in the positive current collector may be 5% by mass or more, and may be 8% by mass or less.

(3) In the lead-acid battery according to (1) or (2), a specific gravity of the electrolyte solution at 20°C may be 1.29 or more and 1.32 or less.

(4) In the lead-acid battery according to any one of (1) to (3), the positive electrode plate may be a clad-type positive electrode plate. In this case, the positive current collector may include a spine, and the spine may have a diameter of 2.4 mm or more and less than 3.6 mm.

The diameter of the spine may be 2.7 mm or more and 3.3 mm or less.

(5) In the lead-acid battery according to any one of (1) to (4), the negative electrode material may include a polymer compound, and the polymer compound may have a peak in a range of 3.2 ppm or more and 3.8 ppm or less in a chemical shift of $^1$H-NMR spectrum measured using deuterated chloroform as a solvent.

(6) In the lead-acid battery according to any one of (1) to (5), the negative electrode material may include a polymer compound, and the polymer compound may include an oxy $C_{2-4}$ alkylene unit as a repeating structure.

(7) In the lead-acid battery according to (6), the polymer compound may include at least one selected from the group consisting of a hydroxy compound including the repeating structure of the oxy $C_{2-4}$ alkylene unit, an etherified product of the hydroxy compound, and an esterified product of the hydroxy compound.

(8) In the lead-acid battery according to (1) to (7), the polymer compound may contain at least one selected from the group consisting of polypropylene glycol, polyoxyethylene oleic acid ester, polyethylene glycol dilaurate, polyethylene glycol distearate, and polyethylene glycol dioleate.

EXAMPLES

Hereinafter, the present invention is specifically described on the basis of examples, but the present invention is not limited to the following examples.

(Experimental Example 1)

In Experimental Example 1, six types of lead-acid batteries (lead-acid batteries A1 to A4, CA1, and CA2) are prepared using the positive current collectors having different DAS, and their characteristics are measured. The six types of lead-acid batteries are produced by the following method.

<<Lead-acid battery A1>>

(a) Preparation of negative electrode plate

A lead powder as a raw material, barium sulfate, carbon black, and sodium lignin sulfonate as the organic expander are mixed with an appropriate amount of a sulfuric acid aqueous solution to obtain a negative electrode paste. At this time, the respective components are mixed so that the content ratio of barium sulfate is 1.5% by mass, the content ratio of carbon black is 0.3% by mass, and the content ratio of the organic expander is 0.1% by mass in the negative electrode material. The negative electrode paste is filled in a mesh portion of a Pb-Sb alloy cast grid that is a negative current collector, and cured and dried to obtain a non-formed negative electrode plate.

(b) Preparation of positive electrode plate

First, a positive current collecting member in which a plurality of spines and a current collector connecting the plurality of spines are integrated is prepared by casting. The positive current collecting member includes 15 spines. One end of each of the spines is integrated with the current collector. The current collector includes a lug. As the material of the positive current collecting member, a Pb-Sb alloy having an Sb content ratio of 5% by mass is used. The spine has a round bar shape with a diameter of 3 mm. The positive current collector is produced by melting a material, pouring the melted material into a mold, and cooling the melted material under atmospheric pressure. At this time, the DAS of the positive current collector is controlled by adjusting the cooling rate (the same applies to the following experimental examples). In addition, a positive current collecting member for DAS measurement is produced under the same conditions as those of the positive current collecting member used for producing the lead-acid battery. For the spine (positive current collector) of the positive current collecting member for measurement, the DAS is measured by the method described above (the same applies to the following experimental examples). Specifically, in the measurement of the DAS, the spine is equally divided into a plurality of regions (specifically, equally divided into ten regions) so as to have substantially the same volume, and the DAS is measured for each region. The arithmetic average of the DAS determined for each of the ten regions is taken as the DAS (the above-described value D1) in the entire positive current collector. The following DAS is a value of the DAS in the entire positive current collector.
Next, the plurality of spines of the positive current collecting member are respectively housed in the plurality of tubes. The current collector and one end of the tube in the length direction on the current collector side are covered with a resin so that the lug is exposed to form a resin-made upper joint. As the tube, a glass fiber porous tube is used.
A positive electrode slurry is prepared by mixing a lead powder (containing 80% by mass of lead oxide and 20% by mass of metal lead), red lead, water, and dilute sulfuric acid. The positive electrode slurry is filled from an opening of the other end portion in the length direction of the tube. The mass ratio of lead powder to red lead is set to 8 : 2. The opening at the other end of the tube is then sealed with the lower joint and dried. In this way, a non-formed clad-type positive electrode plate is prepared.

(c) Preparation of test battery

A flooded-type battery having a rated voltage of 2 V and a rated 5-hour rate capacity of 165 Ah is fabricated. An element of the test battery includes three positive electrode plates and four negative electrode plates sandwiching the positive electrode plates. The positive electrode plate and the negative electrode plate are stacked with a polyethylene separator interposed therebetween to form an element. The element is housed into a container made of a synthetic resin together with an electrolyte solution (aqueous sulfuric acid solution). Next, the container is capped, and formation is performed in the container to prepare a flooded-type lead-acid battery A1. The specific gravity of the electrolyte solution after formation is 1.32 at 20°C. The height of the battery is 426 mm (height from the bottom to the liquid surface of the container: 338 mm), and the amount of the electrolyte solution is 1,700 mL.

<<Lead-acid batteries A2 to A4, CA1, CA2>>

Five types of positive current collecting members having the same shape as the positive current collecting member of the lead-acid battery A1 are produced by changing the production conditions of the positive current collecting member. Specifically, the positive current collecting member is prepared by changing the cooling rate at the time of casting the positive current collecting member. In addition, a positive current collecting member for DAS measurement is produced under the same conditions as those of the positive current collecting member used for producing the lead-acid battery. For the spine (positive current collector) of the positive current collecting member for measurement, the DAS is measured by the method described above.

Next, the lead-acid batteries A2 to A4, CA1, and CA2 are produced similarly to the lead-acid battery A1 except that the above-described positive current collecting member is used.

[Evaluation of battery characteristics]

The batteries prepared in Experimental Examples 1 to 4 are evaluated by the following method.

(i) Charge-discharge cycle test

First, a fully charged battery is provided, and the battery is subjected to a charge-discharge cycle test in which discharge and charge are repeated in a water bath at 15°C $\pm$ 2°C. Discharge and charge are performed under the following conditions.

Discharge: The lead-acid battery is discharged with a current of 0.25 C (A) for 3 hours. Here, C is a numerical value of a rated capacity when the rated capacity is expressed using ampere-hour (Ah) as a unit (the same applies to the following test).

Charge: An electric quantity that is 120% of the discharge capacity is charged with a current of 0.18 C (A).

Before the start of the charge-discharge cycle test and every 100 cycles of the charge-discharge cycle, the following (ii) capacity test and (iii) high-rate discharge performance test are performed. After each test, the battery is fully charged. The life cycle performance is determined by the following method (iv).

(ii) Capacity test

The capacity test is performed in a state where the battery is disposed in a water bath at 30°C $\pm$ 2°C. Discharge is performed at a current value of 0.2 C (A) until a final voltage reaches 1.7 (V), and a discharge capacity is measured.

(iii) High-rate discharge performance test

The high-rate discharge performance test is performed in the state where the battery is disposed in a water bath at 30°C $\pm$ 2°C. Discharge is performed under the conditions that the discharge current is 1.0 C (A) and the final voltage is 1.4 (V), and a discharge duration time is measured.

(iv) Determination of life cycle performance

The number of cycles when the battery to be evaluated satisfies at least one of the following conditions (a) and (b) is determined as the number of life cycles of the battery. It is shown that the larger the numerical value of the number of life cycles, the better the characteristics of the lead-acid battery.

(a) In the charge-discharge cycle test (i), an end-of-discharge voltage is less than 1.5 V.
(b) In the capacity test (ii), the measured capacity is less than 80% of the capacity (initial capacity) before the start of the charge-discharge cycle.

(v) Capacity retention ratio

The capacity retention ratio is determined by the following equation.

$$\text{Capacity retention ratio (\%)} = 100 \times X\,(600)/X\,(0)$$

Here, X (600) is a discharge capacity after 600 cycles in the charge-discharge cycle test (i), and X (0) is a discharge capacity before the start of the charge-discharge cycle test. The discharge capacity is a value of the discharge capacity measured in the capacity test (ii).

The DAS and evaluation results of the positive current collector of the battery are shown in Table 2. The number of life cycles (relative value) shown in Table 2 is a relative value when the number of life cycles of the lead-acid battery A4 is 100.

[Table 2]

| Lead-acid battery | A1 | A2 | A3 | A4 | CA1 | CA2 |
|---|---|---|---|---|---|---|
| DAS($\mu$m) | 3 | 6 | 13 | 20 | 35 | 42 |
| Number of life cycles (relative value) | 147 | 140 | 128 | 100 | 79 | 68 |

The results of Table 2 are shown in the graph of Fig. 7. As shown in Fig. 7, when the DAS is 20 pm or less, the life cycle performance is significantly improved. The smaller the DAS, the better the life cycle performance.

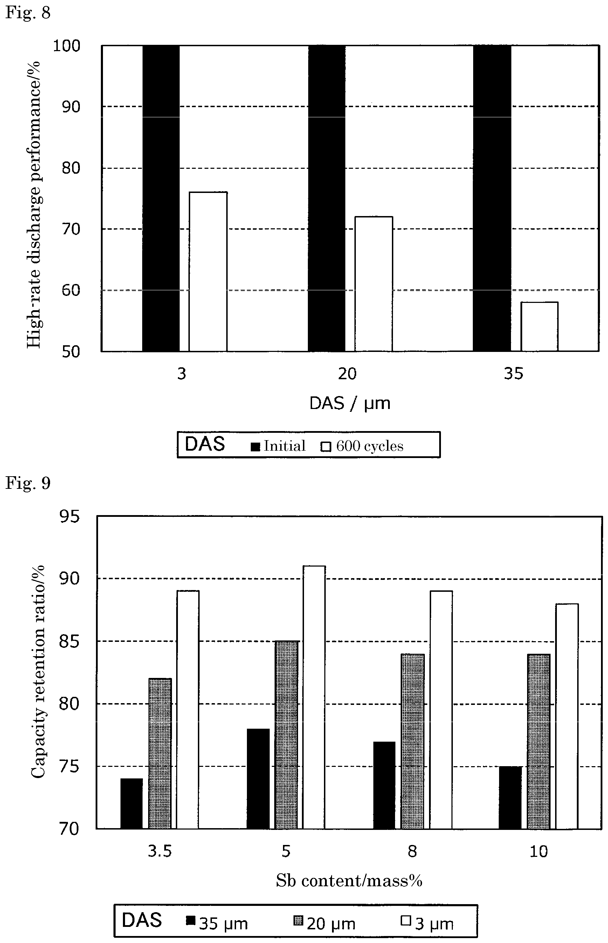

The high-rate discharge performance of the lead-acid batteries A1, A4, and CA1 at the initial stage and after the charge-discharge cycle is evaluated by the method described above. Fig. 8 shows the evaluation results. The data shown in Fig. 8 is a value when an initial high-rate discharge capacity is 100%. As shown in Fig. 8, by setting the DAS to 20 pm or less, good high-rate discharge performance can be achieved even after 600 cycles.

(Experimental Example 2)

In Experimental Example 2, twelve types of lead-acid batteries are produced similarly to the lead-acid battery A1 except that the material of the positive current collecting member and the casting conditions at the time of production are changed. The Sb content ratio of the material of the positive current collecting member is set to the amount shown in Fig. 9. In addition, a positive current collecting member for DAS measurement is produced under the same conditions as those of the positive current collecting member used for producing the lead-acid battery. For the spine (positive current collector) of the positive current collecting member for measurement, the DAS is measured by the method described above.

The capacity retention ratio of twelve types of lead-acid batteries is measured by the method described above. The capacity retention ratios and DAS of these lead-acid batteries are shown in Fig. 9. The higher the capacity retention ratio, the better the characteristics of the lead-acid battery. As shown in Fig. 9, when the DAS is 20 pm or less, a high capacity retention ratio can be achieved even if the Sb content ratio is changed.

(Experimental Example 3)

In Experimental Example 3, fifteen types of lead-acid batteries are produced similarly to the lead-acid battery A1 except that the specific gravity of the electrolyte solution and the casting conditions at the time of producing the positive current collecting member are changed. The specific gravity of the electrolyte solution (aqueous sulfuric acid solution) is changed by changing the concentration of the aqueous sulfuric acid solution. Similarly to the positive current collector of the lead-acid battery A1, the positive current collecting member is produced using 5% by mass of Pb-Sb alloy. The casting conditions of the positive current collecting member are changed similarly to Experimental Example 1. The DAS of the spine of the positive current collecting member produced in Experimental Example 3 is 3 pm, 20 pm, or 35 pm.

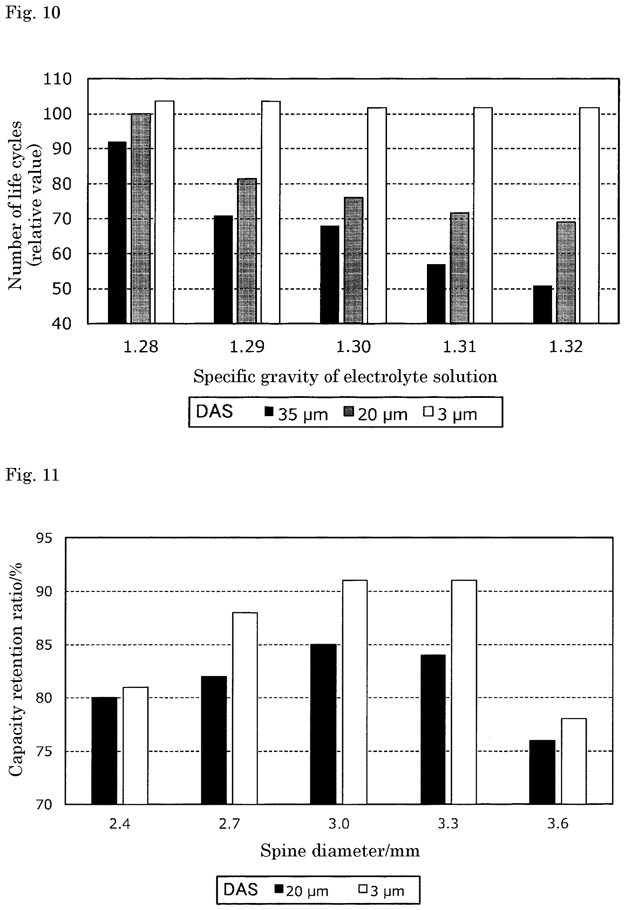

The life cycle performance of fifteen types of lead-acid batteries is evaluated by the method described above. A relationship between the specific gravity of the electrolyte solution, the DAS, and the life cycle performance of these storage batteries is shown in Fig. 10. As described above, the specific gravity of the electrolyte solution is the specific gravity of the electrolyte solution at 20°C of the storage battery in the fully charged state. The life cycle performance on the vertical axis of the graph of Fig. 10 indicates a relative value of the number of life cycles of each battery when the number of life cycles of a battery in which the specific gravity of the electrolyte solution is 1.28 and the DAS is 20 pm is 100.

As shown in Fig. 10, when the DAS is 20 pm or less, high life cycle performance can be achieved. In particular, when the DAS is 35 pm, the life cycle performance is significantly deteriorated when the specific gravity of the electrolyte solution is 1.29 or more. However, when the DAS is 20 pm or less, even if the specific gravity of the electrolyte solution is 1.29 or more (specifically, 1.29 or more and 1.32 or less), the deterioration in the life cycle performance is small.

(Experimental Example 4)

In Experimental Example 4, ten types of lead-acid batteries were produced similarly to the lead-acid battery A1 of Experimental Example 1 except that the size of the spine of the positive current collecting member and the casting conditions of the positive e current collecting member were changed. In Experimental Example 4, the diameter of the spine is the diameter shown in Fig. 11. The cooling condition at the time of casting the positive current collecting member is changed to set the DAS to 3 pm or 20 pm. The specific gravity of the electrolyte solution is set to 1.32.

The capacity retention ratios of ten types of lead-acid batteries to be produced are measured by the method described above. A relationship between the diameter of the spine, the DAS, and the capacity retention ratio of these storage batteries is shown in Fig. 11.

As shown in Fig. 11, when the DAS is 20 pm or less, a high capacity retention ratio is achieved. Further, when the DAS is 20 pm or less and the diameter of the spine is 2.4 mm or more and less than 3.6 mm (for example, 2.4 mm or more and 3.3 mm or less), a higher capacity retention ratio is achieved. Furthermore, when the DAS is 20 pm or less and the diameter of the spine is 2.7 mm or more and 3.3 mm or less, a particularly high capacity retention ratio is achieved.

[Evaluation of battery characteristics]

The batteries produced in Experimental Examples 5 to 7 are evaluated by the following method.

(I) Charge-discharge cycle test

The charge-discharge cycle test is performed under the same conditions as in the charge-discharge cycle test (i) except that a temperature of a water bath in which the battery is disposed is set to 75°C ± 2°C and the electric quantity that is 130% of the discharge capacity is charged during charging.

Before the start of the charge-discharge cycle test and every 100 cycles of the charge-discharge cycle, the following capacity test (II) and low-temperature high-rate discharge performance test (III) are performed. After each test, the battery is fully charged.

The life cycle performance is determined by the following method (IV).

(II) Capacity test

The capacity test is performed under the same conditions as in the capacity test (ii).

(III) Low-temperature high-rate discharge performance test

The low-temperature high-rate discharge performance test is performed in a state where the battery is disposed in a water bath at -15°C ± 2°C. Discharge is performed under the conditions that the discharge current is 1.0 C (A) and the final voltage is 1.0 (V), and a discharge duration time is measured.

(IV) Determination of life cycle performance

The life cycle performance (the number of life cycles) is evaluated based on the same criteria as the determination of the life cycle performance (iv).

(Experimental Example 5)

In Experimental Example 5, the lead-acid battery is produced by adding the polymer compound (P) to the negative electrode material. Specifically, ten types of lead-acid batteries (batteries E1 to E10) are produced under the same conditions and by the same method as those of the lead-acid battery A2 of Experimental Example 1 except that the amount of the polymer compound (P) added to the negative electrode material is changed. That is, the DAS of the positive current collectors of these batteries is 6 pm. As the polymer compound (P), polypropylene glycol (PPG) is used. The life cycle performance of the lead-acid battery and the battery A2 produced is evaluated by the method (IV) described above. Table 3 shows the evaluation results. In Table 3, the PPG content is a ratio (on a mass basis) of polypropylene glycol in the negative electrode material. The life cycle performance in Table 3 is a relative value of the number of life cycles of each battery when the number of life cycles of the battery A2 is 100. The higher the numerical value, the better the life cycle performance.

[Table 3]

| Battery | PPG content (ppm) | Number of life cycles (Relative value) |
|---|---|---|
| A2 | 0 | 100 |
| E1 | 10 | 102 |
| E2 | 20 | 122 |
| E3 | 30 | 189 |

(continued)

| Battery | PPG content (ppm) | Number of life cycles (Relative value) |
|---------|-------------------|----------------------------------------|
| E4 | 50 | 215 |
| E5 | 100 | 222 |
| E6 | 200 | 228 |
| E7 | 300 | 231 |
| E8 | 400 | 222 |
| E9 | 500 | 198 |
| E10 | 600 | 127 |

As shown in Table 3, the content of PPG (polymer compound (P)) is preferably in a range of 30 ppm to 500 ppm, and more preferably in a range of 50 ppm to 400 ppm.

(Experimental Example 6)

In Experimental Example 6, the lead-acid battery is produced by adding the polymer compound (P) to the negative electrode material. Specifically, ten types of lead-acid batteries (batteries F1 to F5) are produced by the same method as in the lead-acid battery A2 of Experimental Example 1 except that the type of the polymer compound (P) added to the negative electrode material is changed. The content of the polymer compound (P) in the negative electrode material is 300 ppm (on a mass basis). The polymer compound (P) used is described in Table 4. The evaluation results of the life cycle performance of (IV) described above for the produced battery are shown in Table 4. The relative value in Table 4 is the relative value of the number of life cycles of each battery when the number of life cycles of the battery A2 is 100.

[Table 4]

| Battery | Type of polymer compound (P) | Number of life cycles (Relative value) |
|---------|------------------------------|----------------------------------------|
| A2 | None | 100 |
| F1 | Polypropylene glycol | 241 |
| F2 | Polyoxyethylene oleic acid ester | 255 |
| F3 | Polyethylene glycol dilaurate | 245 |
| F4 | Polyethylene glycol distearate | 248 |
| F5 | Polyethylene glycol dioleate | 248 |

It is shown that the larger the value of the relative value in Table 4, the better the cycle performance. As shown in Table 4, even when the type of the polymer compound (P) is changed, the cycle performance can be greatly improved as compared with a case where the polymer compound (P) is not used.

In addition, the reduction amount of the electrolyte solution due to the charge-discharge cycle is measured for the battery. The reduction amount of the electrolyte solution by 100 cycles of the charge-discharge cycle test (I) is shown in Table 5. The relative value in Table 5 is a relative value of the reduction amount (on a mass basis) of the electrolyte solution of each battery when the reduction amount (on a mass basis) of the electrolyte solution of the battery A2 is 100.

[Table 5]

| Battery | Type of polymer compound (P) | Reduction amount of electrolyte solution (Relative value) |
|---------|------------------------------|-----------------------------------------------------------|
| A2 | None | 100 |
| F1 | Polypropylene glycol | 57 |
| F2 | Polyoxyethylene oleic acid ester | 44 |
| F3 | Polyethylene glycol dilaurate | 48 |

(continued)

| Battery | Type of polymer compound (P) | Reduction amount of electrolyte solution (Relative value) |
|---|---|---|
| F4 | Polyethylene glycol distearate | 45 |
| F5 | Polyethylene glycol dioleate | 46 |

The reduction amount (relative value) of the electrolyte solution in Table 5 is preferably as small as possible. As shown in Table 5, by adding the polymer compound (P) to the negative electrode material, the reduction in the electrolyte solution can be suppressed. In the batteries F2 to F5 using an esterified product of poly $C_{2-4}$ alkylene glycol, the reduction in the electrolyte solution can be particularly suppressed.

(Experimental Example 7)

In Experimental Example 7, the lead-acid battery is produced by adding the polymer compound (P) to the negative electrode material. Specifically, batteries G1 and CG1 are produced under the same conditions and by the same method as those of the lead-acid batteries A2 and CA1 of Experimental Example 1 except that the polymer compound (P) is added to the negative electrode material. That is, the DAS of the positive current collector of the battery G1 is 6 pm, and the DAS of the positive current collector of the battery CG1 is 35 pm. As the polymer compound (P), polypropylene glycol is used. The content of the polymer compound (P) in the negative electrode material is 300 ppm (on a mass basis). The produced batteries G1 and CG1 and the batteries A2 and CA1 are subjected to the charge-discharge cycle test (I) and the capacity test (II) described above. Table 6 shows results of the capacity test.

[Table 6]

| Battery | A2 | G1 | CA1 | CG1 |
|---|---|---|---|---|
| DAS ($\mu$m) | 6 | 6 | 35 | 35 |
| PPG(ppm) | 0 | 300 | 0 | 300 |
| Number of cycles | Discharge capacity (%) | | | |
| 0 | 100.0 | 100.0 | 100.0 | 100.0 |
| 100 | 92.9 | 98.6 | 90.4 | 95.2 |
| 200 | 89.2 | 97.2 | 85.6 | 91.9 |
| 300 | 84.6 | 95.9 | 79.6 | 89.3 |
| 400 | 79.4 | 95.0 | - | 85.5 |
| 500 | - | 94.2 | - | 80.3 |
| 600 | - | 93.2 | - | - |
| 700 | - | 91.1 | - | - |
| 800 | - | 86.7 | - | - |
| 900 | - | 80.1 | - | - |

The discharge capacity (%) in Table 6 is a relative value when the discharge capacity before the start of the charge-discharge cycle test is 100% for each battery. When the discharge capacity reaches about 80% of the initial capacity, it is determined that the life has been reached, and the subsequent charge-discharge cycle is not performed. As shown in Table 6, when the DAS is 20 pm or less, the effect of addition of the polymer compound (P) is large.

For the batteries G1 and CG1 and the batteries A2 and CA1, 300 cycles of the charge-discharge cycles are performed, and then the low-temperature high-rate discharge performance test (III) is performed. Table 7 shows the test results. The low-temperature high-rate discharge capacity in Table 7 is a relative value when the low-temperature high-rate discharge capacity of the battery CA1 is 100%.

[Table 7]

| Battery | A2 | G1 | CA1 | CG1 |
|---|---|---|---|---|
| DAS ($\mu$m) | 6 | 6 | 35 | 35 |
| PPG(ppm) | 0 | 300 | 0 | 300 |
| Low-temperature high-rate discharge capacity (%, relative value) | 102 | 116 | 100 | 106 |

As shown in Table 7, by adding the polymer compound (P) to the negative electrode material, the low-temperature high-rate discharge performance after charge-discharge cycle can be improved.

INDUSTRIAL APPLICABILITY

The present invention can be used for a lead-acid battery.

DESCRIPTION OF REFERENCE SIGNS

1: Lead-acid battery
2: negative electrode plate
3: positive electrode plate
4: separator
10: container
11: element
12: electrolyte solution
31: tube
32: spine (positive current collector)
33: positive electrode material

**Claims**

1. A lead-acid battery comprising:

   a negative electrode plate containing a negative electrode material;
   an electrolyte solution; and
   a positive electrode plate including a positive current collector and a positive electrode material disposed around the positive current collector,
   wherein the positive current collector includes a metal structure containing a plurality of dendrite arms, and
   an average interval between the plurality of dendrite arms is 20 pm or less.

2. The lead-acid battery according to claim 1, wherein the average interval between the plurality of dendrite arms is 1 pm or more.

3. The lead-acid battery according to claim 1, wherein the average interval between the plurality of dendrite arms is 3 pm or more.

4. The lead-acid battery according to any one of claims 1 to 3, wherein the average interval between the plurality of dendrite arms is 13 pm or less.

5. The lead-acid battery according to any one of claims 1 to 4, wherein the average interval between the plurality of dendrite arms is 6 pm or less.

6. The lead-acid battery according to any one of claims 1 to 5, wherein the positive current collector includes an alloy containing Pb and Sb, and a content ratio of Sb in the alloy is 3.5% by mass or more and 10% by mass or less.

**7.** The lead-acid battery according to claim 6, wherein the content ratio of the Sb in the alloy is 5% by mass or more.

**8.** The lead-acid battery according to claim 6 or 7, wherein the content ratio of the Sb in the alloy is 8% by mass or less.

**9.** The lead-acid battery according to any one of claims 1 to 8, wherein a specific gravity of the electrolyte solution at 20°C is 1.29 or more and 1.32 or less.

**10.** The lead-acid battery according to any one of claims 1 to 9, wherein the positive electrode plate is a clad-type positive electrode plate,

the positive current collector includes a spine, and
the spine has a diameter of 2.4 mm or more and less than 3.6 mm.

**11.** The lead-acid battery according to claim 10, wherein the diameter of the spine is 2.7 mm or more.

**12.** The lead-acid battery according to claim 10 or 11, wherein the diameter of the spine is 3.3 mm or less.

**13.** The lead-acid battery according to any one of claims 1 to 12, wherein the negative electrode material includes a polymer compound, and
the polymer compound has a peak in a range of 3.2 ppm or more and 3.8 ppm or less in a chemical shift of $^1$H-NMR spectrum measured using deuterated chloroform as a solvent.

**14.** The lead-acid battery according to any one of claims 1 to 12, wherein the negative electrode material includes a polymer compound, and the polymer compound includes an oxy $C_{2-4}$ alkylene unit as a repeating structure.

**15.** The lead-acid battery according to claim 14, wherein the polymer compound includes at least one selected from the group consisting of a hydroxy compound containing the repeating structure of the oxy $C_{2-4}$ alkylene unit, an etherified product of the hydroxy compound, and an esterified product of the hydroxy compound.

**16.** The lead-acid battery according to any one of claims 13 to 15, wherein the polymer compound is one or more selected from polypropylene glycol, polyoxyethylene oleic acid ester, polyethylene glycol dilaurate, polyethylene glycol distearate, and polyethylene glycol dioleate.

Fig. 1A

Fig. 1B

Fig. 2A

DAS: approximately 35 μm

Fig. 2B

DAS: approximately 6 μm

Fig. 2C

Fig. 3

Fig. 4A

Fig. 4B

Fig. 5

Fig. 6

Fig. 7

Fig. 8

Fig. 9

Fig. 10

Fig. 11

## INTERNATIONAL SEARCH REPORT

International application No.

**PCT/JP2022/010953**

### A. CLASSIFICATION OF SUBJECT MATTER

*H01M 4/75*(2006.01)i; *H01M 4/14*(2006.01)i; *H01M 4/62*(2006.01)i; *H01M 4/68*(2006.01)i; *H01M 10/08*(2006.01)i
FI:  H01M4/75 A; H01M4/68 A; H01M10/08; H01M4/14 R; H01M4/62 B

According to International Patent Classification (IPC) or to both national classification and IPC

### B. FIELDS SEARCHED

Minimum documentation searched (classification system followed by classification symbols)

H01M4/75; H01M4/14; H01M4/62; H01M4/68; H01M10/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/136941 A1 (HITACHI CHEMICAL CO LTD) 01 September 2016 (2016-09-01) claims 1-11, paragraphs [0001]-[0041], examples, fig. 1-2 | 1-8, 10-12 |
| Y | | 9, 13-16 |
| Y | JP 2017-079144 A (GS YUASA CORP) 27 April 2017 (2017-04-27) paragraphs [0001]-[0005], examples | 9 |
| Y | WO 2020/241878 A1 (GS YUASA CORP) 03 December 2020 (2020-12-03) claims 1-29, paragraphs [0001]-[0009], examples | 13-16 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/010953**

| Patent document cited in search report | | | Publication date (day/month/year) | Patent family member(s) | | | Publication date (day/month/year) |
|---|---|---|---|---|---|---|---|
| WO | 2016/136941 | A1 | 01 September 2016 | JP | 2016-162501 | A | |
| JP | 2017-079144 | A | 27 April 2017 | CN | 106602002 | A | |
| WO | 2020/241878 | A1 | 03 December 2020 | (Family: none) | | | |

Form PCT/ISA/210 (patent family annex) (January 2015)

36

**REFERENCES CITED IN THE DESCRIPTION**

**Patent documents cited in the description**

- JP 57061262 A
- JP 61027067 A
- JP 52005425 A